Europäisches Patentamt

European Patent Office

Office européen des brevets

(11) Numéro de publication: **0 127 494**
**B1**

## (12) FASCICULE DE BREVET EUROPEEN

(45) Date de publication du fascicule du brevet: **01.07.87**

(21) Numéro de dépôt: **84400785.6**

(22) Date de dépôt: **19.04.84**

(51) Int. Cl.⁴: **F 02 B 77/08,** B 60 Q 9/00, G 07 C 5/08

(54) **Dispositif d'aide à la conduite économique pour un véhicule à moteur thermique, notamment un tracteur agricole.**

(30) Priorité: **21.04.83 FR 8306585**

(43) Date de publication de la demande:
**05.12.84 Bulletin 84/49**

(45) Mention de la délivrance du brevet:
**01.07.87 Bulletin 87/27**

(84) Etats contractants désignés:
**DE GB IT**

(56) Documents cités:
**EP-A-0 018 351
FR-A-1 420 973
FR-A-2 083 850
FR-A-2 431 737
FR-A-2 448 077
FR-A-2 451 460
FR-A-2 461 814
GB-A-2 062 237
GB-A-2 067 243**

(73) Titulaire: **REGIE NATIONALE DES USINES RENAULT
Boîte postale 103 8-10 avenue Emile Zola
F-92109 Boulogne-Billancourt (FR)**

(72) Inventeur: **Druter, Yves
30 Allée de la Forêt
F-92360 Meudon la Forêt (FR)**

(74) Mandataire: **Colas, Jean-Pierre et al
Cabinet de Boisse 37, avenue Franklin D. Roosevelt
F-75008 Paris (FR)**

Courier Press, Leamington Spa, England.

## Description

L'invention concerne les dispositif qui donnent au conducteur d'un véhicule les indications utiles pour lui permettre de modifier sa conduite afin de minimiser la consommation de carburant, du type dans lequel on effectue une mesure numérique permanente, respectivement de la charge du moteur, du régime moteur et de la vitesse d'avancément du véhicule, et, à partir de ces trois données et de tables de valeurs déterminées expérimentalement et contenues dans une mémoire morte, et à l'aide de calculs arithmétiques et logiques simples effectués par un microprocesseur, on calcule le rapport de vitesse engagé, la consommation spécifique ou horaire, et le rapport de vitesse théorique qui donnerait une consommation minimale de carburant, et enfin on affiche ces données ou ces résultats.

On connaît déjà par le brevet FR—A—2 431 737 un dispositif de ce type, mais celui ci n'est pas adapté à une utilisation sur un véhicule qui, d'une part, est animé par un moteur Diesel dont l'injection est réalisée par un injecteur du type ROTO DIESEL ou similaire comportant une soupape de dosage à régulation mécanique déterminant le débit de combustible injecté et qui, d'autre part, est destiné à présenter une vitesse d'avance prédéterminée comme c'est le cas pour les tracteurs agricoles.

L'invention vise à résoudre ce problème et, à cet effet, elle a pour objet un dispositif du type précité dans lequel la mesure de la charge du moteur est obtenue par une mesure numérique de la position de la soupape de dosage à l'aide d'un aimant permanent, solidaire de l'extrémité d'une tige assurant normalement la liaison de transmission entre la palette du régulateur mécanique et le levier de la soupape de dosage du dispositif d'injection, cet aimant se déplaçant par rapport à une bobine dont il modifie la self-inductance, ladite bobine étant montée dans un circuit oscillateur ou relaxateur qui produit un courant en créneaux d'une fréquence variant sensiblement d'une manière proportionnelle à l'angle d'ouverture de la soupape de dosage. De plus, ce dispositif comporte un contact de fonctionnement économique associé à un dispositif de commande du microprocesseur et actionnable par l'usager pour commander le calcul et l'affichage du rapport de vitesse théorique et du nouveau régime moteur théorique susceptible d'assurer la même vitesse d'avancement du véhicule pour une consommation minimale de carburant.

Les deux autres grandeurs d'entrée, régime moteur et vitesse d'avancement, sont également mesurées sous forme de fréquences variables par des dispositifs classiques comportant chacun un capteur magnétique fixe en regard d'une roue à dents ou à encoches tournant avec l'organe correspondant.

Les trois variables sont ainsi introduites sous forme de fréquences variables dans un circuit de comptage qui détermine la valeur numérique de chaque grandeur par comptage des impulsions sur des périodes de temps fixes produites par un signal d'horloge, ces valeurs numériques étant mesurées directement par le microprocesseur lorsque le régime moteur est stabilisé.

D'autres particularités de l'invention apparaîtront dans la description qui va suivre d'un mode de réalisation pris comme exemple représenté sur le dessin annexé sur lequel:

la figure 1 est une vue partielle en perspective des organes de réglage du dispositif d'injection;

la figure 2 représente la schéma électrique d'un oscillateur associé à la bobine de captage de la position d'ouverture de la soupape de dosage; et

la figure 3 est un schéma d'ensemble de l'installation.

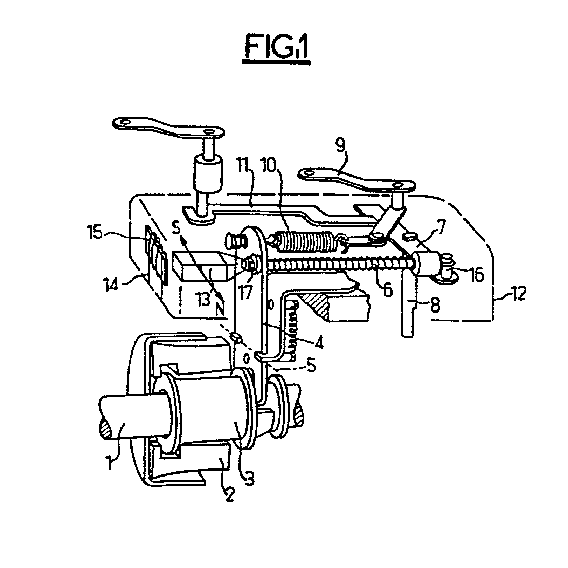

On reconnaît sur la figure 1 l'arbre d'entraînement d'une pompe d'injection ROTO DIESEL à distributeur rotatif de type DPA, avec les masselottes centrifuges 2 qui agissent par l'intermédiaire d'un tube de poussée 3 sur la palette de commande 4 montée oscillante autour d'un axe 5. Cette palette, formant levier de commande, actionne par l'intermédiaire d'une tige de transmission 6 le levier de commande 7 fixe en bout d'une soupape de dosage 8 susceptible de pivoter autour d'un axe vertical. Le levier d'accélération 9 met en tension un ressort de régulation 10 qui agit sur la palette 4 afin de déplacer le point d'équilibre. En outre, la tige 6 est entourée d'un léger ressort et agit sur l'extrémité du levier 7 dans le sens d'une liaison unilatérale, c'est-à-dire susceptible de transmettre un effort de traction qui correspond à une fermeture de la soupape de dosage 8, tout en laissant ce levier libre de pivoter en direction de la palette 4 lorsqu'il est sollicité dans le sens de la fermeture par la barre de stop 11. Tous les organes que l'on vient de voir sont enfermés dans le corps de la pompe non représenté et dans un carter supérieur 12, et immergés dans le gazole.

L'invention consiste à fixer à l'extrémité de la tige 6 au-delà de la palette 4 un aimant permanent 13, et à fixer sur la face intérieure du carter 12, en regard de l'extrémité de cet aimant 13, un capteur magnétique constitué par un bobinage 14 enroulé sur un noyau magnétique 15.

Ce bobinage 14 peut par exemple être constitué par cent spires d'un fil électrique isolé de 120 µm de diamètre bobiné sur le noyau 15, lequel peut être constitué simplement par deux plaques jointives d'un alliage à faible hystérésis (anhyster) d'une épaisseur de 100 µm chacune pour utiliser au maximum les effets de peau.

L'axe du bobinage 14 est par exemple horizontal, tandis que l'aimant 13 a son aimantation nord sud orientée perpendiculairement à la tige 6 et parallèlement à l'axe du bobinage 14. Le débattement angulaire de la soupape de dosage 8 entre ses positions extrêmes est d'environ 30°, auquel correspond un déplacement approximativement linéaire de la tige 6 et de l'aimant 13 d'environ 1 cm. En réalité l'extrémité 16 du levier de commande 7 sur laquelle s'articule la tige 6 se déplace autour de l'axe 8 selon un trajet courbe dans le plan horizontal, tandis que le point 17 d'articulation de cette tige 6 vers la palette 4 se déplace autour de l'axe 5 selon un trajet courbe dans le sens vertical, de sorte que l'extrémité de l'aimant 13 se déplace selon une courbe gauche mais très peu différente de la droite perpendiculaire au noyau 15.

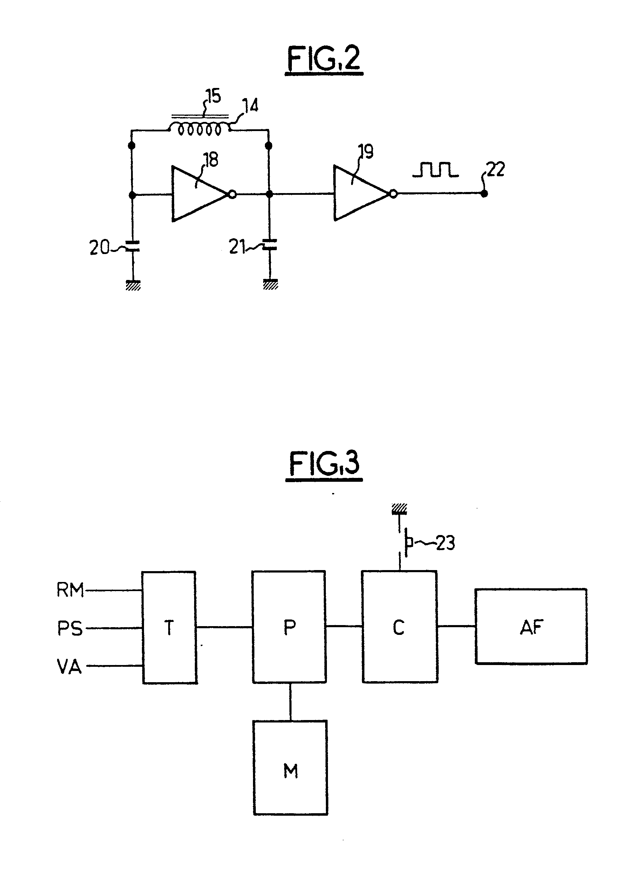

Comme on le voit sur la figure 2, la bobine 14 est insérée dans un circuit oscillateur, formé comme représenté par deux amplificateurs opérationnels inverseurs 18 et 19 et deux condensateurs 20 et 21, qui délivre à sa sortie 22 un signal en créneaux dont la fréquence varie d'une manière à peu près proportionnelle à la course d'ouverture angulaire de la soupape de dosage 8. A titre d'exemple la fréquence peut varier de 1,8 MHz pour la position fermée de la soupape à 1,2 MHz pour la position d'ouverture maximum. En variante on pourrait également utiliser un circuit relaxateur pour produire cette fréquence variable.

Ce signal modulé en fréquence sortant par 22, et représentatif de la position de la soupape de dosage, est transmis à l'entrée PS de la figure 3 sur un circuit de comptage T (par exemple un timer 6840) lequel reçoit également un signal d'horloge qui lui permet de compter les impulsions reçues pendant un temps de décomptage déterminé. La position de la soupape 8 est alors représentée par un mot de 8 bits, avec une précision de 1/256 sur chaque mesure.

Cependant, même avec cette précision, et en raison des oscillations inévitables de la position de la soupape de dosage 8 lors de la mise en oeuvre de la régulation mécanique, les mesures ainsi effectuée ne sont pas stables. Pour avoir une information stable, on effectue dans le microprocesseur P un calcul de moyenne sur un certain nombre de mesures, de référence 256, ce qui représente cependant environ 0,1 seconde seulement.

Le circuit de comptage T reçoit également deux autres signaux en créneaux modulés en fréquence et représentant respectivement le régime moteur arrivant par RM et la vitesse d'avancement du véhicule arrivant par VA. Ces signaux sont élaborés d'une manière classique à l'aide d'un capteur magnétique situé en regard d'une roue dentée tournant avec l'arbre-moteur et l'arbre de sortie de boîte respectivement. Ces deux dernières grandeurs sont également traduites en mots de 8 bits pour être lues directement par le microprocesseur P.

Par une étude expérimentale préliminaire, on détermine pour les 256 valeurs d'ouverture de la soupape de dosage 8 et pour les 256 valeurs du régime moteur les valeurs correspondantes respectivement de la consommation horaire du moteur et du couple moteur. La puissance peut se calculer simplement par le produit du couple moteur par le régime moteur, et pour chaque point du plan régime/puissance on peut déterminer la valeur de la consommation horaire.

Ces diverses valeurs sont stockées sous forme de tables de valeurs dans une mémoire morte M constituée par exemple par un EPROM 2764 pouvant être consulté par le microprocesseur P, lequel est par exemple un circuit 6809.

Dans des conditions de marche normales et une fois le régime moteur stabilisé, le microprocesseur P peut comme précédemment calculer la puissance requise et, à partir des tables de consommation, déduire le régime moteur qui donnerait cette même puissance avec la consommation horaire minimum. Le rapport de vitesse engagé se calcule comme simple quotient entre RM et VA.

Dans une première phase le circuit de commande C (par exemple en 6821) peut déjà extraire du microprocesseur P pour les afficher dans le dispositif d'affichage AF, d'une part le régime moteur et la vitesse d'avancement et d'autre par le rapport enclenché.

Dans une deuxième phase, lorsque le régime du moteur est stabilisé, c'est-à-dire lorsque les valeurs de RM moyen successives ne diffèrent plus sensiblement entre elles, le circuit de commande C peut envoyer au microprocesseur P un programme d'instructions pour effectuer le calcul du couple et de la consommation, à partir de la position de soupape PS et des tables contenues dans la mémoire M, ainsi que le calcul de la puissance et produire un affichage par AF de la consommation horaire ou de la consommation spécifique, cette dernière, exprimée par exemple en 1/kWh, se déduisant de la consommation horaire par simple division par la puissance.

Enfin dans une troisième phase, si un commutateur 23 se trouve fermé pour indiquer que l'utilisateur souhaite connaître le régime économique, le circuit de commande C envoye au microprocesseur P un programme d'instructions pour rechercher d'après les tables la valeur du régime moteur RM qui correspond à la puissance actuelle et à la consommation horaire minimale, puis déterminer le rapport de vitesse théorique comme quotient de ce régime moteur par la vitesse d'avancement, rapport qui en général ne correspond pas exactement à un des rapports discrets possibles de la boîte. Le microprocesseur cherche donc le rapport discret le plus voisin et corrige en conséquence le régime nécessaire pour correspondre à la même vitesse d'avancement, le circuit d'affichage AF affichant alors le rapport de vitesse recommandé et le régime moteur nécessaire.

L'usager n'a plus alors qu'à se conformer à ces indications, c'est-à-dire enclencher le rapport recommandé et régler le moteur au régime souhaité pour être assuré d'avoir la consommation minimale en carburant.

**Revendications**

1. Dispositif d'aide à la conduite économique pour un véhicule à moteur Diesel dont le débit de la pompe d'injection est commandé par une soupape de dosage, comprenant trois moyens de mesures numériques permanentes, respectivement de la charge du moteur (1 à 22, PS), du régime moteur (RM) et de la vitesse d'avancement du véhicule (VA), une mémoire morte (M) contenant des tables de valeur déterminées expérimentalement, un microprocesseur (P) et un dispositif de commande (C) agencés et programmés pour calculer, à partir des trois mesures numériques et des tables de valeur, les valeurs réelles résultant de la mesure ou de calcul respectivement du régime moteur, du rapport de vitesse engagé et de la consommation spécifique ou horaire, et la valeur théorique du rapport de vitesse qui donnerait une consommation minimale de carburant, enfin un dispositif (AF) propre à afficher lesdites valeurs réelles et/ou théorique, caractérisé par le fait que le dispositif de mesure numérique de la charge du moteur est un dispositif de mesure de la position (PS) de la soupape de dosage et comprend un aimant permanent (13) solidiare de l'extrémité de la tige (66) assurant normalement la liaison de transmission entre la palette (4) du régulateur mécanique habituel de la pompe d'injection et le levier (7) de la soupape de dosage de cette pompe, une bobine d'induction constituée par un bobinage (14) à noyau magnétique (15) fixe situé dans le champ de cet aimant (13), ladite bobine d'induction étant insérée dans un circuit oscillateur (18 à 22) ou relaxateur traduisant la position angulaire d'ouverture de la soupape de dosage (8) en une fréquence variable, et un dispositif de comptage (T) qui transforme ladite fréquence variable en un signal numérique, et par le fait que ledit dispositif d'aide à la conduite comporte un contact (23) de fonctionnement économique actionnable par l'usager, et que son dispositif de commande (C) est programmé pour commander le microprocesseur (P) de manière que dans une première phase de fonctionnement il effectue la lecture du régime moteur (RM) et de la vitesse d'avancement (VA), il en fait le quotient pour déterminer le rapport de vitesse engagé, et il affiche sur le dispositif d'affichage (AF) au moins le régime moteur et le rapport de vitesse engagé, que dans une deuxième phase qui suit la première et après avoir vérifié que le régime moteur (RM) est stabilisé, il effectue la lecture de la position de la soupape de dosage (PS), il calcule d'après les tables la consommation horaire, et éventuellement la consommation spécifique en faisant le quotient de cette dernière par la puissance et il affiche au moins l'une de ces deux consommations, enfin que dans une troisième phase qui suit la précédente si l'interrupteur (23) de commande de fonctionnement économique est fermé, il extrait des tables de valeurs, en fonction de la position de la soupape de dosage (PS) déterminée précédemment, le couple et la consommation, il détermine la puissance en faisant le produit du couple par le régime moteur (RM), il recherche le régime moteur théorique qui donnerait la consommation minimale pour la même puissance calculée, il calcule le rapport de vitesse à enclencher en choisissant parmi les rapports discrets de vitesses possibles celui le plus voisin du rapport théorique en ajustant en conséquence le calcul du régime moteur théorique pour correspondre à la même vitesse d'avancement (VA), et enfin il affiche le rapport et le régime moteur théoriques ainsi déterminés.

2. Dispositif selon la revendication 1, caractérisé par le fait que le dispositif de comptage (T) est agencé pour stabiliser la valeur numérique représentative de la position d'ouverture de la soupape de dosage (PS) en réalisant la moyenne sur un certain nombre de mesure, de préférence 256 mesures.

3. Dispositif selon l'une des revendications précédentes, caractérisé par le fait que le régime moteur (RM) et la vitesse d'avancement (VA) sont également mesurés par des dispositifs appropriés sous forme de fréquences variables, et que les trois fréquences variables (RM, PS, VA) sont traduites en signaux numériques par un dispositif de comptage commun (T) qui effectue le comptage des impulsions respectives de ces signaux pendant des périodes de temps fixes.

**Patentansprüche**

1. Hilfseinrichtung zur wirtschaftlichen Führung eines Fahrzeuges mit einem Dieselmotor, bei dem die Fördermenge der Einspritzpumpe durch eine Dosierventil gesteuert ist, mit drei Einrichtungen für ständige numerische Messungen jeweils für die Leistung des Motors (1—22, PS), für die Motordrehzahl (RM) und für die Fahrgeschwindigkeit des Fahrzeuges (VA), mit einem Speicher (M), der experimentell ermittelte Meßwerttabellen enthält, mit einem Mikroprozessor (P) und mit einer Steuervorrichtung (C), die so angeordnet und programmiert sind, daß diese, ausgehend von den drei numerischen Messungen und den Meßwerttabellen, die reellen Werte, die sich aus Messung oder Berechnung der Drehzahl des Motors, des tatsächlichen Übersetzungsverhältnisses und des spezifischen oder stündlichen Verbrauchs ergeben und den theoretischen Wert des Übersetzungsverhältnisses, der einen minimalen Kraftstoffverbrauch ergeben würde, berechnen, und schließlich mit einer Vorrichtung (AF), die geeignet ist, die genannten reellen und/oder theoretischen Werte anzuzeigen, dadurch gekennzeichnet, daß die numerische Meßvorrichtung für die Leistung des Motors eine Vorrichtung für die Messung der Position (PS) des Dosierventils ist und einen Permanentmagneten (13) enthält, der fest am Ende einer Stange (6) befestigt ist, die üblicherweise die Verbindung zwischen der Palette (4) des üblichen mechanischen Reglers der Einspritzpumpe und dem Hebel (7) des Dosierventils dieser Pumpe gewährleistet, daß ein Funkeninduktor, der durch eine Wicklung (14) mit einem ortsfesten magnetischen Kern (15) gebildet ist, im Feld des Magneten (13) angeordnet ist, daß der genannte Funkeninduktor in einen Oszillatorkreis (18—22) oder Relaxator eingeschaltet ist, der die Winkelstellung der Öffnung des Dosierventils (8) in eine variable Frequenz umsetzt und daß eine Rechenvorrichtung (T) die genannte variable Frequenz in ein numerisches Signal unformt und daß die genannte Hilfsvorrichtung zur Steuerung des weiteren einen Kontakt (23) für eine wirtschaftliche Arbeitsweise aufweist, der durch den Benutzer betätigbar ist und daß seine Steuervorrichtung (C) programmiert ist, um den Mikroprozessor (P) derart zu steuern, daß in einer ersten Arbeitsphase die Lesevorrichtung für die Motordrehzahl (RM) und für die Vorwärtsgeschwindigkeit (VA) betätigt wird, daß dann der Quotient hieraus gebildet wird, um das Verhältnis des gegenwärtigen Übersetzungsverhältnisses zu bestimmen und auf einer Anzeigevorrichtung (AF) wenigstens die Motordrehzahl und das gegenwärtige Übersetzungsverhältnis anzuzeigen, daß in einer zweiten, auf die erste Phase folgenden Phase und nach der Bestätigung, daß die Motordrehzahl (RM) stabilisiert ist, die Lesevorrichtung für die Stellung des Dosierventils (PS) aktiviert wird, daß dann die Werte für den stündlichen Verbrauch und gegebenenfalls für den spezifischen Verbrauch berechnet werden, in dem der Quotient des letzteren durch die Leistung gebildet wird und daß wenigstens eine dieser beiden Verbräuche angezeigt wird und daß schließlich in einer dritten Phase, die sich an die vorhergehende anschließt, wenn der Unterbrecher (23) für die Betätigung der ökonomischen Betriebsweise geschlossen ist, er den Tabellen in Abhängigkeit der zuvor bestimmten Stellung des Dosierventils (PS) Werte für des Drehmoment und den Verbrauch entnimmt, er berechnet die Leistung, indem er das Produkt aus dem Drehmoment und der Motordrehzahl (RM) bildet, er sucht die theoretische Motordrehzahl, die den minimalen Verbrauch für die gleiche berechnete Leistung erbringen würde, er berechnet das zu wählende Übersetzungsverhältnis, indem er zwischen den bestimmten möglichen Übersetzungsverhältnissen jenes, das am nächsten zum theoretischen Verhältnis liegt, auswählt, indem er die Berechnung der theoretischen Motordrehzahl berichtigt, um der gleichen Vorwärtsgeschwindigkeit (VA) zu entsprechen und er zeigt schließlich das Übersetzungsverhältnis und die Motordrehzahl, die theoretisch bestimmt wurden, an.

2. Vorrichtung nach Anspruch 1, dadurch gekennzeichnet, daß die Rechenvorrichtung (T) so ausgebildet ist, daß der numerische Wert, der für die Öffnungsstellung des Dosierventils repräsentativ ist, stabilisiert wird, indem der Mittelwert über eine gewisse Anzahl von Messungen, vorteilhaft sind 256 Messungen, realisiert wird.

3. Vorrichtung nach Anspruch 1 oder 2, dadurch gekennzeichnet, daß die Motordrehzahl (RM) und die Vorwärtsgeschwindigkeit (VA) gleichfalls von geeigneten Vorrichtungen in Form von variablen Frequenzen gemessen werden und daß die drei variablen Frequenzen (RM, PS, VA) in numerische Signale von einer gemeinsamen Rechenvorrichtung (T) umgesetzt werden, die das Zählen der entsprechenden Impulse dieser Signale während Perioden mit festen Zeiten vornimmt.

**Claims**

1. A device for assisting the economical operation of a vehicle having a diesel motor in which the flow of the injection pump is controlled by a regulating valve, comprising three permanent digital measuring means for measuring the load of the motor (1 to 22, PS), the motor operating conditions (RM) and the forward speed of the vehicle (VA) respectively, a dead memory (M) containing experimentally determined value tables, a microprocessor (P) and a control device (C) arranged and programmed to calculate, from the three digital measurements and the value tables, the true values resulting from measurement or calculation of the motor operating conditions, the engaged speed-ratio and the specific or hourly consumption respectively, and the theoretical value of the speed-ratio which would give minimal consumption of fuel, and a device (AF) for displaying said true and/or theoretical values, characterised in that the digital measuring device for measuring the motor load is a device for measuring the position (PS) of the regulating valve and comprises a permanent magnet (13) integral with the end of the rod (6) normally ensuring the transmission of drive between the blade (4) of the normal mechanical regulator of the injection pump and the lever (7) of the regulating valve of said pump, and an induction coil constituted by a winding (14) with a fixed magnetic core (15) located in the field of the magnet (13), said induction coil being inserted in an oscillatory circuit (18 to 22) or relaxation circuit for translating the angular position of the opening of the regulating valve (8) into a variable frequency, and a counter (T) which transforms said variable frequency into a digital signal, and in that said device for assisting the operation contains an economically functioning contact (23) actuable by the user and that its control device (C) is programmed to control the microprocessor (P) in such a way that in a first phase of operation it measures the motor operating conditions (RM) and the forward speed (VA), calculates from this the quotient to determine the engaged speed-ratio and displays on the display device (AF) at least the motor operating conditions and the engaged speed-ratio, and that, in a second phase which follows the first phase and after having checked that the motor operating conditions (RM) are stable, it measures the position of the regulating valve (PS), calculates, according to the tables, the hourly consumption and possibly the specific consumption calculating the quotient of this latter amount with power, and displays at least one of these two consumption values, whilst, in a third phase which follows the preceding one, if the economically functioning control switch is closed, it extracts from the value tables, as a function of the position of the regulating valve (PS) already determined, the torque and the consumption, determines the power by calculating the product of the torque and the motor operating conditions (RM), determines the theoretical motor operating conditions which would give the minimum consumption for the same calculated power, calculates the speed-ratio to engage by choosing from the possible speed ratios that which is closest to the theoretical ratio, adjusting as a result the calculation of the theoretical motor operating conditions to correspond to the same forward speed (VA), and displays the theoretical ratio and motor operating conditions thus determined.

2. A device according to claim 1, characterised in that the counter (T) is arranged to stabilise the digital value indicative of the opening position of the regulating valve (PS) by taking the average of a certain number of measurements, preferably 256 measurements.

3. A device according to one of the preceding claims, characterised in that the motor operating conditions (RM) and the forward speed (VA) are also measured by appropriate devices in the form of variable frequencies and that the three variable frequencies (RM, PS, VA) are translated into digital signals by a common counter (T) which counts the respective pulses of these signals during fixed time periods.

# FIG.1

## FIG.2

## FIG.3